Europäisches Patentamt
European Patent Office
Office européen des brevets

(19)

(11) Veröffentlichungsnummer: **0 335 212 A2**

(12)

# EUROPÄISCHE PATENTANMELDUNG

(21) Anmeldenummer: **89104903.3**

(22) Anmeldetag: **18.03.89**

(51) Int. Cl.[4]: **C07F 9/24 , A01N 57/26 , C07F 9/65 , C07F 9/20**

(30) Priorität: **31.03.88 DE 3811006**

(43) Veröffentlichungstag der Anmeldung: **04.10.89 Patentblatt 89/40**

(84) Benannte Vertragsstaaten: **BE CH DE ES FR GB IT LI NL**

(71) Anmelder: **BAYER AG**

**D-5090 Leverkusen 1 Bayerwerk(DE)**

(72) Erfinder: **Sommer, Herbert, Dr.**
**Platz 59**
**D-5630 Remscheid(DE)**
Erfinder: **Arlt, Dieter, Prof. Dr.**
**Rybnikerstrasse 2**
**D-5000 Köln 80(DE)**
Erfinder: **Hartwig, Jürgen, Dr.**
**Franz-Esser Strasse 44**
**D-5090 Leverkusen 3(DE)**
Erfinder: **Homeyer, Bernhard, Dr.**
**Obere Strasse 28**
**D-5090 Leverkusen 3(DE)**
Erfinder: **Matthaei, Hans-Detlef, Dr.**
**Paul-Klee-Strasse 67**
**D-5090 Leverkusen 1(DE)**

(54) **Thionophosphorsäureamidester.**

(57) Die Erfindung betrifft Thionophosphorsäureamidester der allgemeinen Formel

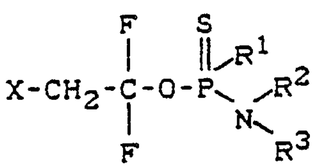

(I)

gefunden,
in welcher
$R^1$ für gegebenenfalls substituierte Reste aus der Reihe Alkoxy, Alkenyloxy und Alkinyloxy steht,
$R^2$ und $R^3$ gleich oder verschieden sind und unabhängig voneinander für Wasserstoff und für gegebenenfalls substituierte Reste aus der Reihe Alkyl, Cycloalkyl, Alkenyl oder Alkinyl stehen
oder
gemeinsam mit dem Stickstoffatom, an welches sie gebunden sind, einen 5- bis 7-gliedrigen, gesättigten oder ungesättigten Ring bilden und
X für Halogen steht,
welche als Schädlingsbekämpfungsmittel verwendet werden können.

EP 0 335 212 A2

## Thionophosphorsäureamidester

Die Erfindung betrifft neue Thionophosphorsäureamidester, ein Verfahren zu ihrer Herstellung, ihre Verwendung als Schädlingsbekämpfungsmittel, insbesondere als Insektizide, Akarizide und Nematizide sowie neue Zwischenprodukte und ein Verfahren zur Herstellung solcher Zwischenprodukte.

Es ist bereits bekannt, daß bestimmte Thionophosphor(phosphon)säureamidester, wie zum Beispiel O-Methyl-O-(2-chlor-1-fluor-ethyl)-thionophosphorsäurediesteramid, pestizid wirksam sind (vgl. DE-OS 26 29 016, entsprechend US-PS 4 159 324). Die Wirkung und die Wirkungsdauer dieser bekannten Verbindungen sind jedoch, insbesondere bei niedrigen Aufwandmengen bzw. Wirkstoffkonzentrationen, nicht immer voll zufriedenstellend.

Es wurden nun neue Thionophosphorsäureamidester der allgemeinen Formel

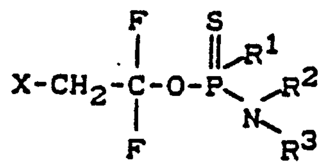 (I)

gefunden,

in welcher

$R^1$ für gegebenenfalls substituierte Reste aus der Reihe Alkoxy, Alkenyloxy und Alkinyloxy steht.

$R^2$ und $R^3$ gleich oder verschieden sind und unabhängig voneinander für Wasserstoff und für gegebenenfalls substituierte Reste aus der Reihe Alkyl, Cycloalkyl, Alkenyl oder Alkinyl stehen

oder

gemeinsam mit dem Stickstoffatom, an welches sie gebunden sind, einen 5- bis 7-gliedrigen, gesättigten oder ungesättigten Ring bilden und

X für Halogen steht.

Die Verbindungen der Formel (I) besitzen ein asymmetrisch substituiertes Phosphoratom. Sie können daher in verschiedenen optischen Isomerenformen vorliegen, die in unterschiedlichen Mengenverhältnissen anfallen können. In allen Fällen liegen sie vorwiegend als Racemate vor. Die Erfindung betrifft sowohl die Isomerengemische als auch die einzelnen Isomeren.

Weiterhin wurde gefunden, daß man die neuen Thionophosphorsäureamidester der Formel (I) erhält, wenn man O-(1,1-Difluor-2-halogen-ethyl)-thionophosphorsäureesterhalogenide der Formel

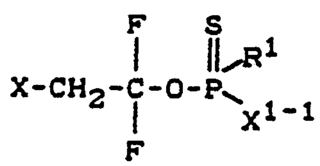 (II)

in welcher

X und $R^1$ die oben angegebene Bedeutung haben und

$X^{1-1}$ für Halogen, vorzugsweise Chlor, steht,

mit Aminen der Formel

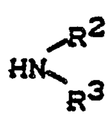 (III)

in welcher

$R^2$ und $R^3$ die oben angegebene Bedeutung haben,

gegebenenfalls in Gegenwart eines Verdünnungsmittels und gegebenenfalls in Gegenwart eines Säureakzeptors umsetzt.

Die neuen Thionophosphorsäureamidester der Formel (I) zeichnen sich in überragender Weise durch eine besonders hohe Wirksamkeit als Schädlingsbekämpfungsmittel, insbesondere als Insektizide, Akarizide und Nematizide aus.

Die erfindungsgemäßen Stoffe stellen somit eine wertvolle Bereicherung der Technik dar.

Als gegebenenfalls substituiertes Alkyl in der Definition von $R^2$ und $R^3$ in den allgemeinen Formeln, steht geradkettiges oder verzweigtes Alkyl mit vorzugsweise 1 bis 20, besonders bevorzugt 1 bis 12, insbesondere 1 bis 6 und ganz besonders bevorzugt 1 bis 4 Kohlenstoffatomen. Beispielhaft seien gegebenenfalls substituiertes Methyl, Ethyl, n-Propyl, i-Propyl, n-Butyl, sec-Butyl, i-Butyl, tert-Butyl, n-Pentyl, i-Pentyl und tert-Pentyl genannt.

Für den Begriff gegebenenfalls substituiertes Alkenyl selbst oder als Bestandteil der Gruppe Alkenyloxy in den Definitionen von $R^1$, $R^2$ und $R^3$ in den allgemeinen Formeln steht geradkettiges oder verzweigtes Alkenyl mit vorzugsweise 2 bis 8, besonders bevorzugt 2 bis 6 und insbesondere 2 bis 4 Kohlenstoffatomen. Beispielhaft seien gegebenenfalls substituiertes Vinyl, Allyl, 2-Butenyl, 3-Butenyl und 1-Methylallyl genannt.

Unter dem Begriff gegebenenfalls substituiertes Alkoxy in der Definition von $R^1$ in den allgemeinen Formeln ist geradkettiges oder verzweigtes Alkoxy mit vorzugsweise 1 bis 6, insbesondere 1 bis 4 Kohlenstoffatomen zu verstehen. Beispielhaft seien gegebenenfalls substituiertes Methoxy, Ethoxy, Propoxy, Butoxy sowie ihre Isomeren, wie z. B. i-Propoxy, i-, s-und tert.-Butoxy genannt, wobei gegebenenfalls substituiertes Methoxy und Ethoxy besonders hervorgehoben werden.

Unter dem Begriff gegebenenfalls substituiertes Alkinyl selbst oder als Bestandteil der Gruppe Alkinyloxy in den Definitionen $R^1$, $R^2$ und $R^3$ in den allgemeinen Formeln ist geradkettiges oder verzweigtes Alkinyl mit vorzugsweise 2 bis 6, besonders bevorzugt 2 bis 4 Kohlenstoffatomen zu verstehen. Beispielhaft seien gegebenenfalls substituiertes Ethinyl, 2-Propinyl, 2-Butinyl, 3-Butinyl und 1-Methyl-2-propinyl genannt.

Als gegebenenfalls substituiertes Cycloalkyl in den Definitionen $R^2$ und $R^3$ steht Cycloalkyl mit vorzugsweise 3 bis 8, insbesondere 3, 5 oder 6 Kohlenstoffatomen. Beispielhaft seien gegebenenfalls substituiertes Cyclopropyl, Cyclobutyl, Cyclopentyl, Cyclohexyl und Cycloheptyl genannt.

Die in der Definition von $R^1$, $R^2$ und $R^3$ genannten substituierten Reste können einen oder mehrere, vorzugsweise 1 bis 3, insbesondere 1 oder 2 gleiche oder verschiedene Substituenten tragen. Als bevorzugte Substituenten für Alkyl, Alkenyl und Alkinyl seien aufgeführt:

Alkoxy mit 1 bis 4 Kohlenstoffatomen, wie Methoxy, Ethoxy, n-Propoxy, i-Propoxy, n-Butoxy, i-Butoxy, sec-Butoxy, tert-Butoxy und Halogen.

Die Reste Alkoxy, Alkenyloxy und Alkinyloxy können vorzugsweise durch Halogene wie Fluor, Chlor, Brom und Iod, insbesondere Fluor, Chlor und Brom und durch $C_1$-$C_4$-Alkoxy substituiert sein.

Als bevorzugte Substituenten für Cycloalkyl seien aufgeführt:

Alkyl mit 1 bis 4 Kohlenstoffatomen, wie Methoxy, Ethyl, n-Propyl, i-Propyl, n-Butyl, i-Butyl, sec-Butyl, und tert-Butyl, Halogenalkyl, wie z.B. Trifluormethyl und Halogen.

Bevorzugt sind die Reste $R^1$, $R^2$ und $R^3$ unsubstituiert.

Halogen, in der Definition X und $X^{1-1}$ in den allgemeinen Formeln sowie als Substituenten für eine Gruppe, steht für Fluor, Chlor, Brom und Iod, insbesondere Fluor, Chlor und Brom, im Falle von X insbesondere für Chlor oder Brom und im Falle $X^{1-1}$ insbesondere für Chlor.

Wenn $R^2$ und $R^3$ gemeinsam mit dem Stickstoffatom einen Ring bilden, enthält dieser 5 bis 7, vorzugsweise 5 oder 6 Ringglieder. Der Ring kann 1 bis 3 Doppelbindungen enthalten, vorzugsweise ist er jedoch gesättigt. Als besonders bevorzugte Ringe seien der Pyrrolidin- und der Piperidin-Ring genannt.

In den allgemeinen Formeln steht $R^1$ vorzugsweise für $C_1$-$C_4$-Alkoxy, insbesondere Methoxy und Ethoxy.

Vorzugsweise stehen in den allgemeinen Formeln $R^2$ und $R^3$ nicht gleichzeitig für Wasserstoff.

In den allgemeinen Formeln stehen vorzugsweise $R^2$ für Wasserstoff und $R^3$ für $C_1$-$C_4$-Alkyl.

Von den erfindungsgemäßen Thionophosphorsäureamidestern der Formel (I) sind diejenigen bevorzugt, in welchen

$R^1$ für gegebenenfalls durch Halogen und/oder $C_1$-$C_4$-Alkoxy substituiertes $C_1$-$C_4$-Alkoxy, $C_2$-$C_6$-Alkenyloxy und $C_2$-$C_6$-Alkinyloxy steht,

$R^2$ und $R^3$ gleich oder verschieden sind und unabhängig voneinander für Wasserstoff, für gegebenenfalls durch Halogen und/oder $C_1$-$C_4$-Alkoxy substituiertes $C_1$-$C_4$-Alkyl; für gegebenenfalls durch Methyl, Ethyl, Fluor und/oder Chlor substituiertes Cycloalkyl mit 3 bis 8 Kohlenstoffatomen; für gegebenenfalls durch Halogen, und/oder $C_1$-$C_4$-Alkyl substituiertes $C_2$-$C_6$-Alkenyl und/oder $C_2$-$C_6$-Alkinyl stehen,

oder

gemeinsam mit dem Stickstoffatom einen 5- bis 6-gliedrigen, gesättigten oder ungesättigten Ring bilden und

X für Fluor, Chlor oder Brom (vorzugsweise Chlor oder Brom) steht.

Hierbei werden die Verbindungen der Formel (I) bevorzugt, in welchen

$R^1$ für gegebenenfalls durch Halogen oder $C_1$-$C_4$-Alkoxy substituiertes $C_1$-$C_4$-Alkoxy steht,

$R^2$ für Wasserstoff steht,

$R^3$ für gegebenenfalls durch Halogen oder $C_1$-$C_4$-Alkoxy substituiertes $C_1$-$C_4$-Alkyl steht und

X für Chlor oder Brom steht.

Besonders bevorzugt sind diejenigen Thionophosphorsäureamidester der Formel (I), in welchen

$R^1$ für gegebenenfalls durch Fluor, Chlor, Methoxy und/oder Ethoxy substituiertes $C_1$-$C_4$-Alkoxy, $C_2$-$C_3$-Alkenyloxy und $C_2$-$C_4$-Alkinyloxy steht,

$R^2$ und $R^3$ gleich oder verschieden sind und unabhängig voneinander für Wasserstoff, für gegebenenfalls durch Fluor, Chlor, Brom, Methoxy und/oder Ethoxy substituiertes $C_1$-$C_4$-Alkyl, für gegebenenfalls durch Methyl, Ethyl, Fluor und/oder Chlor substituiertes Cycloalkyl mit 3 bis 6 Kohlenstoffatomen; für gegebenenfalls durch Fluor, Chlor, Methyl und/oder Ethyl substituiertes $C_2$-$C_4$-Alkenyl und $C_2$-$C_4$-Alkinyl stehen,

oder

gemeinsam mit dem Stickstoffatom, an welches sie gebunden sind, für Piperidyl und Pyrrolidinyl stehen und

X für Fluor, Chlor und Brom (vorzugsweise Chlor oder Brom) steht.

Hierbei werden die Verbindungen der Formel (I) bevorzugt, in welchen

$R^1$ für gegebenenfalls durch Fluor, Chlor, Methoxy und/oder Ethoxy substituiertes $C_1$-$C_4$-Alkoxy steht,

$R^2$ für Wasserstoff steht,

$R^3$ für gegebenenfalls durch Fluor, Chlor, Brom, Methoxy und/oder Ethoxy substituiertes $C_1$-$C_4$-Alkyl steht und

X für Chlor oder Brom steht.

Ganz besonders bevorzugt sind diejenigen Thionophosphorsäureamidester mit Formel (I) in welchen

$R^1$ für Methoxy, Ethoxy und Chlorethoxy (vorzugsweise für Methoxy und Ethoxy) steht,

$R^2$ für Wasserstoff steht,

$R^3$ für Methyl, Ethyl, n-Propyl, iso-Propyl, iso-Butyl, sec-Butyl und Allyl steht und

X für Chlor und Brom steht.

Verwendet man als Ausgangsstoffe beispielsweise O-(2-Brom-1,1-difluor-ethyl)-O-ethyl-thionophosphorsäurediesterchlorid und iso-Propylamin, so kann der Reaktionsablauf des erfindungsgemäßen Verfahrens durch das folgende Formelschema wiedergegeben werden:

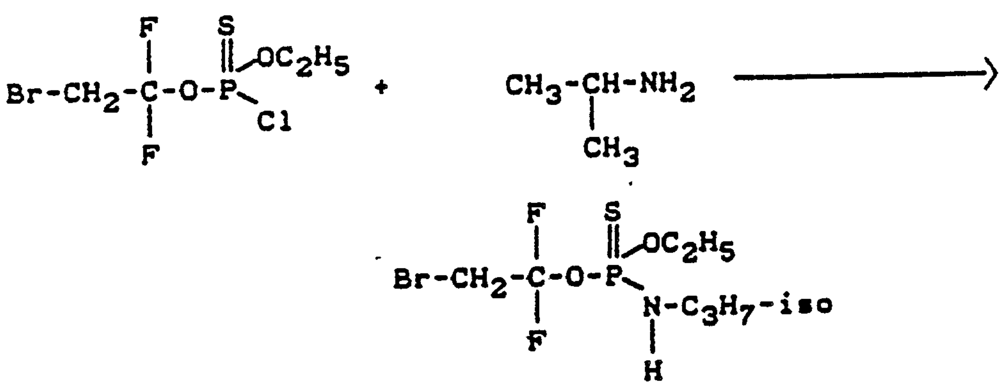

Die bei dem erfindungsgemäßen Verfahren als Ausgangsstoffe zu verwendenden O-(1,1-Difluor-2-halogen-ethyl)-thionophosphorsäurediesterhalogenide sind durch die Formel (II) allgemein definiert. In dieser Formel (II) stehen X, $X^{1-1}$ und $R^1$ vorzugsweise bzw. besonders bevorzugt für diejenigen Reste, welche oben bei den Definitionen für Formel (I) bzw. Formel (II) angegeben sind.

Die O-(1,1-Difluor-2-halogen-ethyl)-thionophosphorsäurediesterhalogenide der Formel (II) sind neu und Teil der vorliegenden Erfindung.

Man erhält die Verbindungen der Formel (II), wenn man O-(1,1-Difluor-2-halogen-ethyl)-thionophosphorsäureesterdihalogenide der Formel

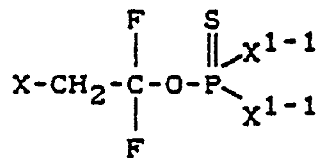

(IV)

in welcher
X und $X^{1-1}$ die oben angegebene Bedeutung haben,
mit Alkoholen derFormel
$R^1$-M (V)
in welcher
$R^1$ die oben angegebene Bedeutung hat und
M für Wasserstoff oder ein Alkalimetall- oder Erdalkalimetalläquivalent (z.B. Kalium, Natrium oder Calzium) steht,
gegebenenfalls in Gegenwart eines Säureakzeptors, wie beispielsweise Collidin und gegebenenfalls in Gegenwart eines Lösungsmittels, wie beispielsweise Ether, bei Raumtemperatur umsetzt (vgl. DE-OS 26 29 016 und DE-OS 26 30 561).

Die bei dem Verfahren zur Herstellung der Verbindungen der Formel (II) als Ausgangsstoffe zu verwendenden O-(1,1-Difluor-2-halogen-ethyl)-thionophosphorsäureesterdihalogenide sind durch die Formel (IV) allgemein definiert. In dieser Formel (IV) stehen X und $X^{1-1}$ vorzugsweise bzw. besonders bevorzugt für diejenigen Reste, welche oben bei den Definitionen für die Formel (I) bzw. Formel (II) angegeben sind.

Die O-(1,1-Difluor-2-halogen-ethyl)-thionophosphorsäureesterdihalogenide der Formel (IV) sind neu und Teil der vorliegenden Erfindung.

Man erhält die Verbindungen der Formel (IV), wenn man O-(1,1-Difluor-2-halogen-ethyl)-phosphorsäureesterdihalogenide der Formel

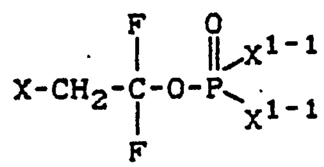

(VI)

in welcher
X und $X^{1-1}$ die oben angegebene Bedeutung haben,
mit Thiophosphorylchlorid der Formel
$PSCl_3$ (VII)
gegebenenfalls in Gegenwart eines Verdünnungsmittels und gegebenenfalls in Gegenwart eines Phosphorsulfids, wie beispielsweise Phosphor(V)sulfid ($P_2S_5$, $P_4S_{10}$) oder 2,4-bis-(4-Methoxyphenyl)-1,3,2,4-dithiaphosphetan-2,4-disulfid (Lawesson's Reagenz) umsetzt. Als Verdünnungsmittel zur Herstellung der neuen Verbindungen der Formel (IV) kommen praktisch inerte organische Lösungsmittel sowie Thiophosphorylchlorid infrage.

Hierzu gehören vorzugsweise aromatische, gegebenenfalls halogenierte Kohlenwasserstoffe, wie Toluol, Xylol, Chlorbenzol und o-Dichlorbenzol, Dichlortoluol, Mono-und Dichlorxylol. Besonders bevorzugt ist Thiophosphorylchlorid.

Bei dem Verfahren zur Herstellung der neuen Verbindungen der Formel (IV) arbeitet man im allgemeinen bei Temperaturen zwischen 100 °C und 160 °C, vorzugsweise bei Temperaturen zwischen 120 °C und 140 °C.

Bei der Durchführung des Verfahrens zur Herstellung der Verbindungen der Formel (IV) setzt man 1 Mol Ausgangsstoff der Formel (VI) mit 1 bis 20 Mol, vorzugsweise 1 bis 6 Mol Thiophosphorylchlorid und 0,0001 bis 0,2 Mol, vorzugsweise 0,001 bis 0,01 Mol Phosphor(V)sulfid um. Die Umsetzungen werden im allgemeinen bei Normaldruck durchgeführt.

Bei der Durchführung des Verfahrens zur Herstellung der Verbindungen der allgemeinen Formel (IV) wird der Ausgangsstoff der Formel (VI) in einem der angegebenen Lösungsmittel, besonders bevorzugt Thiophosphorylchlorid, zusammen mit Phosphor(V)sulfid unter Rückfluß erhitzt, wobei das gebildete Phosphoroxychlorid laufend abdestilliert wird. Nach beendeter Reaktion können die als Rohprodukte anfallenden Verbindungen der Formel (IV) in konventioneller Weise gereinigt werden, vorteilhaft durch

fraktionierte Destillation unter vermindertem Druck. Zu ihrer Charakterisierung dient der Retentionsindex (Kovats-Index).

Die als Ausgangsstoffe zu verwendenden O-(1,1-Difluor-2-halogen-ethyl)-phosphorsäureesterdihalogenide sind durch die Formel (VI) allgemein definiert. In dieser Formel (VI) stehen X und $X^{1-1}$ vorzugsweise bzw. besonders bevorzugt für diejenigen Reste, welche oben bei den Definitionen für Formel (I) angegeben sind.

Die Verbindungen der Formel (VI) sind bekannt (DE-OS 25 07 779).

Das weiterhin als Ausgangsstoff zu verwendende Thiophosphorylchlorid der Formel (VII) ($PSCl_3$) ist eine allgemein bekannte Verbindung der anorganischen Chemie.

Das erfindungsgemäße Verfahren zur Herstellung der neuen Verbindungen der Formel (I) wird bevorzugt unter Verwendung von Verdünnungsmitteln durchgeführt.

Hierzu gehören insbesondere aliphatische oder aromatische, gegebenenfalls halogenierte Kohlenwasserstoffe, wie beispielsweise Pentan, Hexan, Heptan, Cyclohexan, Petrolether, Benzin, Ligroin, Benzol, Toluol, Xylol, Methylenchlorid, Ethylenchlorid, Chloroform, Tetrachlorkohlenstoff, Chlorbenzol und o-Dichlorbenzol, Ether wie Dimethyl- und Dibutylether, Glykoldimethylether und Diglykoldimethylether, Tetrahydrofuran und Dioxan, Ketone wie Aceton, Methyl-ethyl-, Methyl-isopropyl- und Methyl-isobutyl-keton, Ester wie Essigsäuremethylester und -ethylester, Nitrile wie z.B. Acetonitrile und Propionitril, Amide wie z.B. Dimethylformamid, Dimethylacetamid und N-Methyl-pyrrolidon sowie Dimethylsulfoxid, Tetramethylensulfon und Hexamethylphosphorsäuretriamid.

Als Säureakzeptoren können bei dem Verfahren zur Herstellung der neuen Verbindungen der Formel (I) alle üblicherweise für derartige Umsetzungen verwendbaren Säurebindemittel eingesetzt werden. Vorzugsweise in Frage kommen Erdalkalimetallhydroxide wie z.B. Calciumhydroxid, Alkalicarbonate und -alkoholate wie Natrium-und Kaliumcarbonat, Natrium- und Kaliummethylat bzw. -ethylat, ferner aliphatische, aromatische oder heterocyclishe Amine, beispielsweise Triethylamin, Trimethylamin, Dimethylanilin, Dimethylbenzylamin, Pyridin, Collidin, 1,5-Diazabicyclo-[4,3,0]-non-5-en (DBN), 1,8-Diazabicyclo-[5,4,0]-undec-7-en (DBU) und 1,4-Diazabicyclo-[2,2,2]-octan (DABCO).

Die Reaktionstemperaturen können bei dem Verfahren zur Herstellung der Verbindungen der Formel (I) in einem größeren Bereich variiert werden. Im allgemeinen arbeitet man bei Temperaturen zwischen 0 °C und 100 °C, vorzugsweise bei Temperaturen zwischen 20 °C und 60 °C.

Die Umsetzung läßt man im allgemeinen bei Normaldruck ablaufen. Zur Durchführung des erfindungsgemäßen Verfahrens setzt man die Reaktionsteilnehmer vorzugsweise im äquimolaren Verhältnis ein. Ein Überschuß der einen oder anderen Komponente bringt keine wesentlichen Vorteile. Die Reaktion wird vorzugsweise in einem der angegebenen Lösungsmittel in Gegenwart eines Säureakzeptors durchgeführt. Die Aufarbeiteung des Ansatzes erfolgt nach üblichen Methoden durch Filtration, Waschen des Filtrats und Abdestillieren des Lösungsmittels.

Die neuen Verbindungen fallen in Form von Ölen an, die sich teilweise nicht unzersetzt destillieren lassen, jedoch durch sogenanntes "Andestillieren", d.h. durch längeres Erhitzen unter vermindertem Druck auf mäßig erhöhte Temperatur von den letzten flüchtigen Anteilen befreit und auf diese Weise gereinigt werden können. Zu ihrer Charakterisierung dient der Retentionsindex (Kovats-Index).

Die Wirkstoffe eignen sich zur Bekämpfung von tierischen Schädlingen, vorzugsweise Arthropoden und Nematoden, insbesondere Insekten und Spinnentieren, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.

Aus der Ordnung der Diplopoda z.B. Blaniulus guttulatus.

Aus der Ordnung der Chilopoda z.B. Geophilus carpophagus, Scutigera spec.

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.

Aus der Ordnung der Dermaptera z.B. Forficula auricularia.

Aus der Ordnung der Isoptera z.B. Reticulitermes spp..

Aus der Ordnung der Anoplura z.B. Phylloxera vastatrix, Pemphigus spp., Pediculus humanus corporis, Haematopinus spp., Linognathus spp.

Aus der Ordnung der Mallophaga z.B. Trichodectes spp., Damalinea spp.

Aus der Ordnung der Thysanoptera z.B. Hercinothrips femoralis, Thrips tabaci.

Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.

Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp., Earias insulana, Heliothis spp., Spodoptera exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.

Aus der Ordnung der Coleoptera z.B. Anobium punctatum, Rhizopertha dominica, Acanthoscelides obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varive stis, Atomaria spp., Oryzaephilus surinamensis, Antho nomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Cono derus spp., Melolontha melolontha, Amphimallon solsti tialis, Costelytra zealandica.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Os cinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp..

Aus der Ordnung der Arachnida z.B. Scorpio maurus, Latrodectus mactans.

Aus der Ordnung der Acarina z.B. Acarus siro, Argas spp., Ornithodorus spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Zu den pflanzenparasitären Nematoden gehören Pratylenchus spp., Radopholus similis, Ditylenchus dipsaci, Tylenchulus semipenetrans, Heterodera spp., Meloidogyne spp., Aphelenchoides spp., Longidorus spp., Xiphinema spp., Trichodorus spp..

Die erfindungsgemäßen Wirkstoffe der Formel (I) zeichnen sich durch eine hervorragende insektizide Wirksamkeit aus. Sie zeigen insbesondere beim Einsatz als Bodeninsektizide eine hervorragende Wirkung gegen Maden wie z.B. Phorbia antiqua-Maden, gegen Blattläuse, wie z.B. Myzus persicae sowie eine hervorragende Wirkung gegen Nematoden, wie z.B. Meloidogyne incognita.

Die erfindungsgemäßen Wirkstoffe zeichnen sich durch eine hervorragende insektizide Wirksamkeit, insbesondere bei der Bekämpfung von Orthoptera-Arten, wie z.B. Blattella germanica und Coleoptera-Arten, wie z.B. Sitophilus granarius, aus.

Die erfindungsgemäßen Wirkstoffe können auch sehr gut zur Bekämpfung von Hygieneschädlingen, wie z.B. Musca domestica-Dipteren, Aedes aegypti-Dipteren und Aedes aegypti-Larven, eingesetzt werden.

Die Wirkstoffe können in Abhängigkeit von ihren jeweiligen physikalischen und/oder chemischen Eigenschaften in übliche Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als

Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier und/oder schaumerzeugende Mittel kommen in Frage: z.B. nichtionogene und anionische Emul gatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90%.

Die Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a..

Die Wirkstoffe können ferner in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne daß der zugesetzte Synergist selbst aktiv wirksam sein muß.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Herstellungsbeispiele:

Beispiel I-1

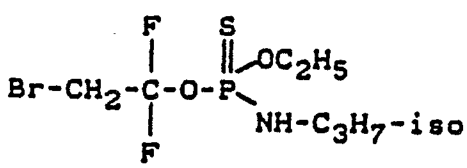

Zu einer Lösung von 22,8 g (0,075 Mol) O-Ethyl-O-(2-brom-1,1-difluor-ethyl)-thionophosphorsäurediesterchlorid in 200 ml Diethylether tropft man bei +20° C 11,1 g (0,19 Mol) Isopropylamin und rührt 16 Stunden bei Raumtemperatur. Das Reaktionsgemisch wird in Wasser gegossen, die organische Phase abgetrennt, über Magnesiumsulfat getrocknet und das Lösungsmittel unter vermindertem Druck abgezogen. Man erhält 16,6 g (68 % der Theorie) O-Ethyl-O-(2-brom-1,1-difluor-ethyl)-thionophosphorsäurediesterisopropylamid mit dem Retentionsindex 1451*.

In analoger Weise zu Beispiel (I-1) und unter Berücksichtigung der Angaben in der Beschreibung zu dem erfindungsgemäßen Verfahren, werden die in der folgenden Tabelle 1 aufgeführten Endprodukte der Formel

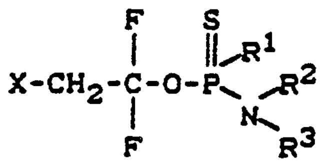

(I)

erhalten:

Tabelle: 1

| Bsp. Nr. | X | $R^1$ | $R^2$ | $R^3$ | Retentions-index* |
|---|---|---|---|---|---|
| I-2 | Cl | $-OC_2H_5$ | H | $-C_3H_7$-iso | 1372 |
| I-3 | Cl | $-OC_2H_5$ | H | $-CH_3$ | 1308 |
| I-4 | Cl | $-OCH_3$ | H | $-C_3H_7$-iso | 1322 |
| I-5 | Cl | $-OCH_3$ | H | $-CH_3$ | 1256 |
| I-6 | Cl | $-OCH_3$ | H | $-CH_2-CH=CH_2$ | 1369 |
| I-7 | Cl | $-OCH_3$ | H | $-C_3H_7$-n | 1387 |
| I-8 | Cl | $-OC_2H_5$ | H | $-C_2H_5$ | 1353 |
| I-9 | Cl | $-OC_2H_5$ | H | $-C_3H_7$-n | 1435 |
| I-10 | Cl | $-OC_2H_5$ | H | $-CH_2-CH=CH_2$ | 1419 |
| I-11 | Br | $-OC_2H_5$ | H | $-C_4H_9$-iso | 1558 |
| I-12 | Br | $-OC_2H_5$ | H | $-C_4H_9$-sec | 1545 |
| I-13 | Cl | $-OCH_3$ | H | $-C_2H_5$ | 1306 |
| I-14 | Cl | $-OCH_3$ | $-C_2H_5$ | $-C_2H_5$ | 1374 |
| I-15 | Cl | $-OCH_3$ | H | $-C_4H_9$-sec | 1412 |
| I-16 | Cl | $-OCH_3$ | H | $-C_4H_9$-tert. | 1370 |
| I-17 | Cl | $-OCH_3$ | H | $-C_4H_9$-iso | 1432 |
| I-18 | Cl | $-OCH_3$ | $-CH_3$ | $-CH_3$ | 1237 |
| I-19 | Cl | $-OCH_3$ | H | H | |
| I-20 | Br | $-OCH_3$ | H | $-C_3H_7$-iso | 1398 |

* Die Retentionsindices (Kovats-Index) wurden gaschromatographisch auf einer Siedepunktphase (Dimethylsilicon) ermittelt.

T a b e l l e : 1

| Bsp. Nr. | X | $R^1$ | $R^2$ | $R^3$ | Retentions-index* |
|---|---|---|---|---|---|
| I-21 | Br | $-OCH_3$ | H | $-C_3H_7$-n | 1473 |
| I-22 | Br | $-OCH_3$ | H | $-CH_2-CH=CH_2$ | 1447 |
| I-23 | Br | $-OCH_3$ | H | $-C_4H_9$-sec | 1504 |
| I-24 | Cl | $-OCH_3$ | H | $-CH_2-C\equiv CH$ | 1385 |
| I-25 | Cl | $-OCH_3$ | H | $-C_4H_9$ | 1486 |
| I-26 | Cl | $-OCH_3$ | H | 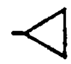 | 1420 |
| I-27 | Cl | $-OCH_3$ | H | 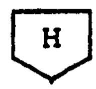 | 1613 |
| I-28 | Cl | $-OCH_3$ | H | $-C_5H_{11}$-iso | 1536 |
| I-29 | Cl | $-OCH_3$ | H | $-C_5H_{11}$ | 1581 |
| I-30 | Cl | $-OCH_3$ | H | $-CH_2-CH(C_2H_5)_2$ | 1620 |
| I-31 | Cl | $-OC_2H_5$ | H | $-C_4H_9$-sec | 1462 |
| I-32 | Cl | $-OC_2H_5$ | H | $-C_4H_9$ | 1530 |
| I-33 | Cl | $-OC_2H_5$ | H | $-C_4H_9$-iso | 1479 |
| I-34 | Cl | $-OC_2H_5$ | H | $-C_4H_9$-tert. | 1420 |
| I-35 | Cl | $-OC_2H_5$ | $CH_3$ | $-CH_3$ | 1282 |
| I-36 | Br | $-OC_2H_5$ | H | $-C_3H_7$ | 1518 |
| I-37 | Br | $-OC_2H_5$ | H | $-CH_3$ | 1388 |
| I-38 | Br | $-OCH_3$ | H | $-CH_3$ | 1339 |
| I-39 | Cl | $-OC_2H_5$ | $C_2H_5$ | $-C_2H_5$ | 1416 |
| I-40 | Cl | $-OCH_3$ | H | $-CH(C_2H_5)_2$ | 1497 |

* Die Retentionsindices (Kovats-Index) wurden gaschromatographisch auf einer Siedepunktphase (Dimethylsilicon) ermittelt.

Herstellung von Ausgangsprodukten

Beispiel II-1

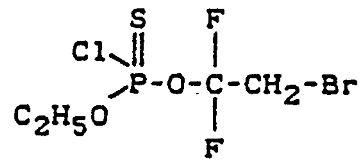

Eine Lösung von 88,2 g (0,3 Mol) O-(2-Brom-1,1-difluor-ethyl)-thionophosphoräureesterdichlorid in 200 ml Ether versetzt man unter Kühlung mit 100 ml (1,7 Mol) Ethanol, rührt das Gemisch 16 Stunden bei Raumtemperatur, engt ein, nimmt in Ligroin auf, wäscht 2 mal mit Wasser, trocknet die organische Phase über Magnesiumsulfat und zieht das Lösungsmittel unter vermindertem Druck ab.
Man erhält in 76 %iger Ausbeute das O-Ethyl-O-(2-brom-1,1-difluor-ethyl)-thionophosphorsäurediesterchlorid mit dem Retentionsindex 1242*.

Nach der im Beispiel (II-1) angegebenen Methode werden auch die in der folgenden Tabelle 2 aufgeführten Verbindungen der Formel

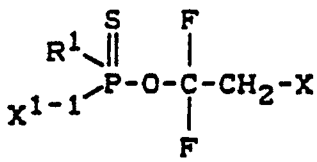

(II)

hergestellt.

Tabelle : 2

| Bsp. Nr. | X | $X^{1-1}$ | $R^1$ | Retentionsindex* |
|---|---|---|---|---|
| II-2 | Cl | Cl | $-OCH_3$ | 1104 |
| II-3 | Cl | Cl | $-OC_2H_5$ | 1161 |
| II-4 | Cl | Cl | $-OCH_2CH_2Cl$ | 1362 |
| II-5 | Br | Cl | $-OCH_3$ | 1180 |

* Die Retentionsindices (Kovats-Index) wurden gaschromatographisch auf einer Siedepunktphase (Dimethylsilicon) ermittelt.

Beispiel (IV-1)

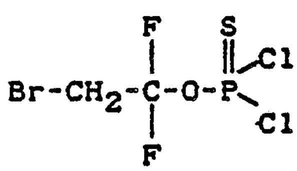

1667 g (6,0 Mol) O-(2-Brom-1,1-difluor-ethyl)-phosphorsäureesterdichlorid, 3257 g (19,2 Mol) Thiophosphorylchlorid und 32,7 g (0,147 Mol) Phosphor(V)sulfid, werden 5 Tage auf 140 °C erhitzt und anschließend destilliert. Man erhält 1132 g (64,2 % der Theorie) O-(2-Brom-1,1-difluor-ethyl)-thionophosphorsäureesterdichlorid vom Siedepunkt 46 °C / 0,3 mbar, mit dem Retentionsindex 1119*.

Nach der im Beispiel (IV-1) angegebenen Methode wird auch die in der folgenden Tabelle 3 aufgeführte

Verbindung der Formel

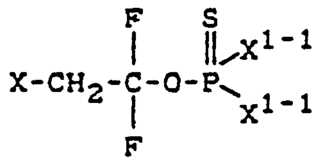

(IV)

erhalten:

Tabelle : 3

| Bsp. Nr. | X | $X^{1-1}$ | Retentionsindex* |
|---|---|---|---|
| IV-2 | Cl | Cl | 1037 |

* Die Retentionsindices (Kovats-Index) wurden gaschromatographisch auf einer Siedepunktphase (Dimethylsilicon) ermittelt.

## Verwendungsbeispiele

In den nachfolgenden Verwendungsbeispielen wurde die nachstehend angegebene Verbindung als Vergleichsverbindung eingesetzt:

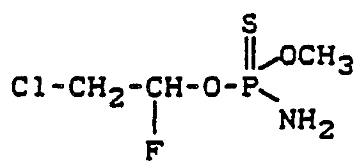

(A)

(bekannt aus DE-OS 26 29 016, welcher die US-PS 4 159 324 entspricht).

## Beispiel A

Grenzkonzentrations-test / Bodeninsekten

Testinsekt: Phorbia antiqua-Maden (im Boden)
Lösungsmittel : 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffes in der Zubereitung praktisch keine Rolle, entscheidend ist allein die Wirkstoffgewichtsmenge pro Volumeneinheit Boden, welche in ppm (= mg/l) angegeben wird. Man füllt den Boden in Töpfe und läßt diese bei Raumtemperatur stehen.

Nach 24 Stunden werden die Testtiere in den behandelten Boden gegeben und nach weiteren 2 bis 7 Tagen wird der Wirkungsgrad des Wirkstoffs durch Auszählen der toten und lebenden Testinsekten in % bestimmt. Der Wirkungsgrad ist 100 %, wenn alle Testinsekten abgetötet worden sind, er ist 0 %, wenn noch genau so viele Testinsekten leben wie bei der unbehandelten Kontrolle.

Bei diesem Test zeigten z.B. die Verbindungen der Herstellungsbeispiele I-2, I-3, I-4, I-6 und I-7 bei einer beispielhaften Konzentration von 20 ppm einen Wirkungsgrad von 100 %, während die Vergleichsverbindung bei der gleichen Konzentration nur 0 % ergab.

Beispiel B

Grenzkonzentrations-Test / Wurzelsystemische Wirkung

Testinsekt: Myzus persicae
Lösungsmittel: 3 Gewichtsteile Aceton
Emulgator : 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den behandelten Boden in Töpfe und bepflanzt diese mit Kohl (Brassica oleracea). Der Wirkstoff kann so von den Pflanzenwurzeln aus dem Boden aufgenommen und in die Blätter transportiert werden.

Für den Nachweis des wurzelsystemischen Effektes werden nach 7 Tagen ausschließlich die Blätter mit den obengenannten Testtieren besetzt. Nach weiteren 2 Tagen erfolgt die Auswertung durch Zählen oder Schätzen der toten Tiere. Aus den Abtötungszahlen wird die wurzelsystemische Wirkung des Wirkstoffs abgeleitet. Sie ist 100 %, wenn alle Testtiere abgetötet sind und 0 %, wenn noch genau so viele Testinsekten leben wie bei der unbehandelten Kontrolle.

Bei diesem Test zeigte z.B. die Verbindung des Herstellungsbeispiele I-2 bei einer beispielhaften Konzentration von 10 ppm eine Wirkung von 95 % während die Vergleichsverbindung bei der gleichen Konzentration 0 % Wirkung ergab.

Beispiel C

Grenzkonzentrations-Test / Nematoden

Testnematode: Meloidogyne incognita
Lösungsmittel: 3 Gewichtsteile Aceton
Emulgator : 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt, der mit den Testnematoden stark verseucht ist. Dabei spielt die Konzentration des Wirkstoffs in der Zubereitung praktisch keine Rolle, entscheidend ist allein die Wirkstoffmenge pro Volumeneinheit Boden, welche in ppm angegeben wird. Man füllt den behandelten Boden in Töpfe, sät Salat ein und hält die Töpfe bei einer Gewächshaus-Temperatur von 27 °C.

Nach vier Wochen werden die Salatwurzeln auf Nematodenbefall (Wurzelgallen) untersucht und der Wirkungsgrad des Wirkstoffs in % bestimmt. Der Wirkungsgrad ist 100 %, wenn der Befall vollständig vermieden wird, er ist 0 %, wenn der Befall genau so hoch ist wie bei den Kontrollpflanzen in unbehandeltem, aber in gleicher Weise verseuchtem Boden.

Bei diesem Test zeigte z.B. die Verbindung des Herstellungsbeispieles I-2 bei einer beispielhaften Konzentration von 2,5 ppm eine Wirkung von 100 %, während die Vergleichsverbindung bei der gleichen Konzentration 0 % Wirkung ergab.

Beispiel D

$LT_{100}$-Test für Dipteren

Testtiere: Musca domestica
Zahl der Testtiere: 25
Lösungsmittel: Aceton

2 Gewichtsteile Wirkstoff werden in 1000 Volumenteilen Lösungsmittel aufgenommen. Die so erhaltene Lösung wird mit weiterem Lösungsmittel auf die gewünschten geringeren Konzentrationen verdünnt.

2,5 ml Wirkstofflösung werden in eine Petrischale pipettiert. Auf dem Boden der Petrischale befindet sich ein Filterpapier mit einem Durchmesser von etwa 9,5 cm. Die Petrischale bleibt so lange offen stehen, bis das Lösungsmittel vollständig verdunstet ist. Je nach Konzentration der Wirkstofflösung ist die Menge Wirkstoff pro $m^2$ Filterpapier verschieden hoch. Anschließend gibt man die angegebene Anzahl der Testtiere in die Petrischale und bedeckt sie mit einem Glasdeckel.

Der Zustand der Testtiere wird laufend kontrolliert. Es wird diejenige Zeit ermittelt, welche für einen 100 %igen knock down-Effekt notwendig ist.

Bei diesem Test zeigten z.B. die Verbindungen der Herstellungsbeispiele I-2 und I-7 bei einer beispielhaften Konzentration von 0,002 % einen $LT_{100}$-Wert von 90′ und die Verbindungen der Herstellungsbeispiele I-3 und I-5 bei einer beispielhaften Konzentration von 0,002 % einen $LT_{100}$-Wert von 55′ bzw. 75′, während die Vergleichsverbindung bei der gleichen Konzentration einen $LT_{100}$-Wert von 240′ ergab.

Beispiel E

$LD_{100}$-Test

Testtiere: Blattella germanica
Zahl der Testtiere: 5
Lösungsmittel: Aceton

2 Gewichtsteile Wirkstoff werden in 1000 Volumenteilen Lösungsmittel aufgenommen. Die so erhaltene Lösung wird mit weiterem Lösungsmittel auf die gewünschten Konzentrationen verdünnt.

2,5 ml Wirkstofflösung werden in eine Petrischale pipettiert. Auf dem Boden der Petrischale befindet sich ein Filterpapier mit einem Durchmesser von etwa 9,5 cm. Die Petrischale bleibt so lange offen stehen, bis das Lösungsmittel vollständig verdunstet ist. Je nach Konzentration der Wirkstofflösung ist die Menge Wirkstoff pro $m^2$ Filterpapier verschieden hoch. Anschließend gibt man die angegebene Anzahl der Testtiere in die Petrischale und bedeckt sie mit einem Glasdeckel.

Der Zustand der Testtiere wird 3 Tage nach Ansetzen der Versuche kontrolliert. Bestimmt wird die Abtötung in %. Dabei bedeutet 100 %, daß alle Testtiere abgetötet wurden; 0 % bedeutet, daß keine Testtiere abgetötet wurden.

Bei diesem Test zeigten z.B. die Verbindungen der Herstellungsbeispiele I-2 und I-3 bei einer beispielhaften Konzentration von 0,002 % eine Abtötung von 100 %, während die Vergleichsverbindung bei der gleichen Konzentration 0 % Abtötung ergab.

Beispiel F

$LD_{100}$-Test

Testtiere: Sitophilus granarius
Zahl der Testtiere: 10
Lösungsmittel: Aceton

2 Gewichtsteile Wirkstoff werden in 1000 Volumenteilen Lösungsmittel aufgenommen. Die so erhaltene Lösung wird mit weiterem Lösungsmittel auf die gewünschten Konzentrationen verdünnt.

2,5 ml Wirkstofflösung werden in eine Petrischale pipettiert. Auf dem Boden der Petrischale befindet sich ein Filterpapier mit einem Durchmesser von etwa 9,5 cm. Die Petrischale bleibt so lange offen stehen, bis das Lösungsmittel vollständig verdunstet ist. Je nach Konzentration der Wirkstofflösung ist die Menge Wirkstoff pro $m^2$ Filterpapier verschieden hoch. Anschließend gibt man die angegebene Anzahl der

Testtiere in die Petrischale und bedeckt sie mit einem Glasdeckel.

Der Zustand der Testtiere wird 3 Tage nach Ansetzen der Versuche kontrolliert. Bestimmt wird die Abtötung in %. Dabei bedeutet 100 %, daß alle Testtiere abgetötet wurden; 0 % bedeutet, daß keine Testtiere abgetötet wurden.

Bei diesem Test zeigten z.B. die Verbindungen der Herstellungsbeispiele I-2, I-3, I-5, I-6 und I-7 bei einer beispielhaften Konzentration von 0,002 % eine Abtötung von 100 %, während die Vergleichsverbindung bei der gleichen Konzentration eine Abtötung von 30 % ergab.

## Beispiel G

$LT_{100}$-Test für Dipteren

Testtiere: Aedes aegypti
Zahl der Testtiere: 20
Lösungsmittel: Aceton

2 Gewichtsteile Wirkstoff werden in 1000 Volumenteilen Lösungsmittel aufgenommen. Die so erhaltene Lösung wird mit weiterem Lösungsmittel auf die gewünschten geringeren Konzentrationen verdünnt.

2,5 ml Wirkstofflösung werden in eine Petrischale pipettiert. Auf dem Boden der Petrischale befindet sich ein Filterpapier mit einem Durchmesser von etwa 9,5 cm. Die Petrischale bleibt so lange offen stehen, bis das Lösungsmittel vollständig verdunstet ist. Je nach Konzentration der Wirkstofflösung ist die Menge Wirkstoff pro $m^2$ Filterpapier verschieden hoch. Anschließend gibt man die angegebene Anzahl der Testtiere in die Petrischale und bedeckt sie mit einem Glasdeckel.

Der Zustand der Testtiere wird laufend kontrolliert. Es wird diejenige Zeit ermittelt, welche für einen 100 %igen knock down-Effekt notwendig ist.

Bei diesem Test zeigten z.B. die folgenden Verbindungen der Herstellungsbeispiele I-2 und I-3 bei einer beispielhaften Konzentration von 0,002 eine $LT_{100}$ von 120′, während die Vergleichsverbindung bei der gleichen Konzentration eine $LT_{100}$ von $3^h$ (50 %) ergab.

## Beispiel H

Mückenlarven-Test

Testtiere: Aedes aegypti-Larven
Lösungsmittel: 99 Gewichsteile Aceton
Emulgator: 1 Gewichtsteil Benzylhydroxydiphenylpolyglykolether

Zur Herstellung einer zweckmäßigen Wirkstoffzubereitung löst man 2 Gew-Teile Wirkstoff in 1000 Volumenteilen Lösungsmittel, das Emulgator in der oben angegebenen Menge enthält. Die so erhaltene Lösung wird mit Wasser auf die gewünschten geringeren Konzentrationen verdünnt.

Man füllt die wäßrigen Wirkstoffzubereitungen in Gläser und setzt anschließend etwa 25 Mückenlarven in jedes Glas ein.

Nach 24 Stunden wird die Abtötung in % bestimmt. Dabei bedeutet 100 %, daß alle Larven abgetötet worden sind. 0 % bedeutet, daß überhaupt keine Larven abgetötet worden sind.

Bei diesem Test zeigten z.B. die Verbindungen der Herstellungsbeispiele I-2, I-3, I-5, I-6 und I-7 bei einer beispielhaften Konzentration von 0,1 % eine Abtötung von 100 %, während die Vergleichsverbindung bei der gleichen Konzentration 0 % Abtötung ergab.

**Ansprüche**

1. Thionophosphorsäureamidester der allgemeinen Formel

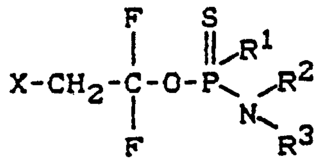

(I)

in welcher
$R^1$ für gegebenenfalls substituierte Reste aus der Reihe Alkoxy, ALkenyloxy und Alkinyloxy steht,
$R^2$ und $R^3$ gleich oder verschieden sind und unabhängig voneinander für Wasserstoff und für gegebenenfalls substituierte Reste aus der Reihe Alkyl, Cycloalkyl, Alkenyl oder Alkinyl stehen
oder
gemeinsam mit dem Stickstoffatom, an welches sie gebunden sind, einen 5- bis 7-gliedrigen, gesättigten oder ungesättigten Ring bilden und
X für Halogen steht.

2. Verbindungen gemäß Anspruch 1,
in welchen
$R^1$ für gegebenenfalls durch Halogen und/oder $C_1$-$C_4$-Alkoxy substituiertes $C_1$-$C_4$-Alkoxy, $C_2$-$C_6$-Alkenyloxy und $C_2$-$C_6$-Alkinyloxy steht,
$R^2$ und $R^3$ gleich oder verschieden sind und unabhängig voneinander für Wasserstoff, für gegebenenfalls durch Halogen und/oder $C_1$-$C_4$-Alkoxy substituiertes $C_1$-$C_4$-Alkyl; für gegebenenfalls durch Methyl, Ethyl, Fluor und/oder Chlor substituiertes Cycloalkyl mit 3 bis 8 Kohlenstoffatomen; für gegebenenfalls durch Halogen, und/oder $C_1$-$C_4$-Alkyl substituiertes $C_2$-$C_6$-Alkenyl und $C_2$-$C_6$-Alkinyl stehen,
oder
gemeinsam mit dem Stickstoffatom einen 5- bis 6-gliedrigen, gesättigten oder ungesättigten Ring bilden und
X für Fluor, Chlor oder Brom steht.

3. Verbindungen gemäß Anspruch 1,
in welchen
$R^1$ für gegebenenfalls durch Fluor, Chlor, Methoxy und/oder Ethoxy substituiertes $C_1$-$C_4$-Alkoxy, $C_2$-$C_3$-Alkenyloxy und $C_2$-$C_4$-Alkinyloxy steht,
$R^2$ und $R^3$ gleich oder verschieden sind und unabhängig voneinander für Wasserstoff, für gegebenenfalls durch Fluor, Chlor, Brom, Methoxy und/oder Ethoxy substituiertes $C_1$-$C_4$-Alkyl, für gegebenenfalls durch Methyl, Ethyl, Fluor und/oder Chlor substituiertes Cycloalkyl mit 3 bis 6 Kohlenstoffatomen; für gegebenenfalls durch Fluor, Chlor, Methyl und/oder Ethyl substituiertes $C_2$-$C_4$-Alkenyl und $C_2$-$C_4$-Alkinyl stehen,
oder
gemeinsam mit dem Stickstoffatom, an welches sie gebunden sind, für Piperidyl und Pyrrolidinyl stehen und
X für Fluor, Chlor und Brom steht.

4. Verbindung der Formel

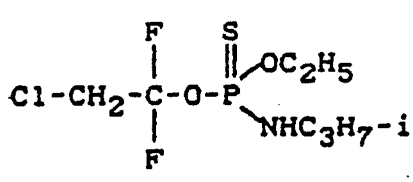

5. Verfahren zur Herstellung der Thionophosphorsäureamidester der allgemeinen Formel

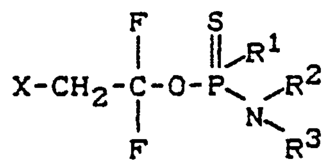

(I)

in welcher
R' für gegebenenfalls substituierte Reste aus der Reihe Alkoxy, Alkenyloxy und Alkinyloxy steht,
$R^2$ und $R^3$ gleich oder verschieden sind und unabhängig voneinander für Wasserstoff und für gegebenenfalls substituierte Reste aus der Reihe Alkyl, Cycloalkyl, Alkenyl oder Alkinyl stehen
oder
gemeinsam mit dem Stickstoffatom, an welches sie gebunden sind, einen 5- bis 7- gliedrigen, gesättigten oder ungesättigten Ring bilden und
X für Halogen steht,
dadurch gekennzeichnet, daß man O-(1,1-Difluor-2-halogen-ethyl)-thionophosphorsäureesterhalogenide der Formel

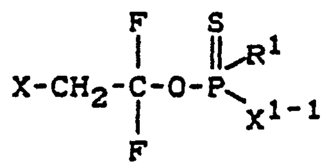

(II)

in welcher
X und $R^1$ die oben angegebene Bedeutung haben und
$X^{1-1}$ für Halogen steht,
mit Aminen der Formel

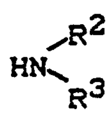

(III)

in welcher
$R^2$ und $R^3$ die oben angegebene Bedeutung haben,
gegebenenfalls in Gegenwart eines Verdünnungsmittels und gegebenenfalls in Gegenwart eines Säureakzeptors umsetzt.

6. Schädlingsbekämpfungsmittel, gekennzeichnet durch einen Gehalt an mindestens einem Thionophosphorsäureamidester der Formel (I), gemäß den Ansprüchen 1 oder 5.

7. Verwendung von Thionophosphorsäureamidestern der Formel (I) gemäß den Ansprüchen 1 oder 5 zur Bekämpfung von Schädlingen.

8. Verfahren zur Bekämpfung von Schädlingen, dadurch gekennzeichnet, daß man Thionophosphorsäureamidester der Formel (I) gemäß den Ansprüchen 1 oder 5 auf Schädlinge und/oder ihren Lebensraum einwirken läßt.

9. Verfahren zur Herstellung von Schädlingsbekämpfungsmitteln, dadurch gekennzeichnet, daß man Thionophosphorsäureamidester der Formel (I) gemäß den Ansprüchen 1 oder 5 mit Streckmitteln und/oder oberflächenaktiven Mitteln vermischt.

10. O-(1,1-Difluor-2-halogen-ethyl)-thionophosphorsäureesterhalogenide der Formel

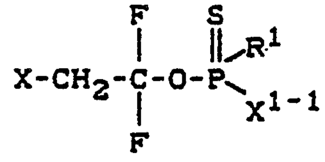

(II)

in welcher
X und $R^1$ die Anspruch 1 angegebene Bedeutung haben und
$X^{1-1}$ für Halogen steht.

11. Verfahren zur Herstellung der Verbindungen der Formel (II) gemäß Anspruch 10, dadurch gekennzeichnet, daß man O-(1,1-Difluor-2-halogen-ethyl)-thionophosphorsäureesterdihalogenide der Formel

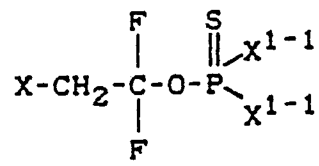

(IV)

in welcher
X und $X^{1-1}$ die in Anspruch 10 angegebene Bedeutung haben,
mit Alkoholen der Formel
$R^1$-M (V)
in welcher
$R^1$ die oben angegebene Bedeutung hat und
M für Wasserstoff oder ein Alkalimetall- oder Erdalkalimetalläquivalent steht,
gegebenenfalls in Gegenwart eines Säureakzeptors und gegebenenfalls in Gegenwart eines Lösungsmittels bei Raumtemperatur umsetzt.

12. O-(1,1-Difluor-2-halogen-ethyl)-thionophosphorsäureesterdihalogenide der Formel

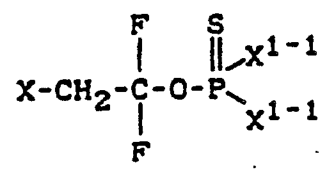

(IV)

in welcher
X und $X^{1-1}$ für Halogen stehen.

13. Verfahren zur Herstellung der Verbindungen der Formel IV gemäß Anspruch 11, dadurch gekennzeichnet, daß man O-(1,1-Difluor-2-halogen-ethyl)-phosphorsäureesterdihalogenide der Formel

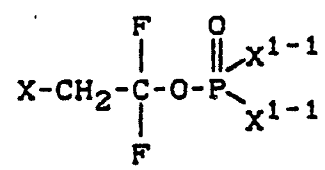

(VI)

in welcher
X und $X^{1-1}$ die oben angegebene Bedeutung haben,
mit Thiophosphorylchlorid der Formel
$PSCl_3$ (VII)
gegebenenfalls in Gegenwart eines Verdünnungsmittels und gegebenenfalls in Gegenwart eines Phosphorsulfids, oder 2,4-bis-(4-Methoxyphenyl)-1,3,2,4-dithiaphosphetan-2,4-disulfid (Lawesson's Reagenz) umsetzt.